## Europäisches Patentamt

## European Patent Office

## Office européen des brevets

(11) Veröffentlichungsnummer: **0 094 500**
**B1**

# EUROPÄISCHE PATENTSCHRIFT

(45) Veröffentlichungstag der Patentschrift:
07.01.87

(51) Int. Cl.⁴: **G 02 B 6/14**

(21) Anmeldenummer: **83103102.6**

(22) Anmeldetag: **29.03.83**

(54) **Verfahren zur Erweiterung der numerischen Apertur einer Lichtquelle.**

(30) Priorität: **13.05.82 DE 3218014**

(43) Veröffentlichungstag der Anmeldung:
**23.11.83 Patentblatt 83/47**

(45) Bekanntmachung des Hinweises auf die Patenterteilung:
07.01.87 Patentblatt 87/2

(84) Benannte Vertragsstaaten:
**AT CH DE FR GB IT LI NL**

(56) Entgegenhaltungen:
DE - A - 2 834 928
DE - A - 2 944 977
DE - C - 3 042 587

ELECTRONICS, Februar 1981 S.L. STOROZUM "Mode scrambling can enhance fiber-optic system performance", Seiten 163-166
ELECTRONICS LETTERS, Band 16, Nr. 5, Februar 1980 A.B. PUC "Pulse broadening compensation in fibre-optical links", Seiten 162, 163
C.-C. TIMMERMANN "Lichtwellenleiter: Wellenausbreitung in Glasfasern u. Hohlleitern" 1981,

(73) Patentinhaber: **ANT Nachrichtentechnik GmbH,**
**Gerberstrasse 33, D-7150 Backnang (DE)**

(72) Erfinder: **Bohnert, Werner, Dipl.-Ing.,**
**Hornbergstrasse 77, D-7000 Stuttgart (DE)**

(74) Vertreter: **Schickle, Gerhard, Dipl.-Ing. et al, ANT**
**Nachrichtentechnik GmbH Patent- und Lizenzabteilung**
**Gerberstrasse 33, D-7150 Backnang (DE)**

(56) Entgegenhaltungen: (Fortsetzung)
**VIEWEG & SOHN VERLAGSGESELLSCHAFT MBH,**
**Braunschweig Seiten 107-116**

*Die Akte enthält technische Angaben, die nach dem*
*Eingang der Anmeldung eingereicht wurden und die*
*nicht in dieser Patentschrift enthalten sind.*

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Anordnung zur Erweiterung der numerischen Apertur einer Lichtquelle auf eine höhere numerische Apertur eines von der Lichtquelle gespeisten Lichtwellenleiters, bei der zwischen der Lichtquelle und dem Lichtwellenleiter mindestens ein Lichtwellenleiterstück eingefügt ist, in dem neben den von der Lichtquelle eingespeisten Wellenmoden auch höhere Wellenmoden angeregt werden.

Die Ausleuchtung eines Wellenleiters, d.h. die räumliche und winkelmässige Verteilung des von einer Lichtquelle in den Wellenleiter eingekoppelten Lichts, hängt sehr stark von der Apertur der Lichtquelle und deren Positionierung relativ zum Lichtwellenleiter ab. Dies bedeutet, dass z.B. bei einer Dämpfungs- oder Dispersionsmessung eines Lichtwellenleiters die Messergebnisse von den Koppelbedingungen zwischen der Lichtquelle und dem Messobjekt abhängen. Man erhält also schon bei geringsten Änderungen der Koppelbedingungen für ein und denselben Lichtwellenleiter unterschiedliche Messergebnisse.

Die einleitend dargelegte aus der DE-A 2 944 977 bekannte Anordnung erreicht mittels eines Modenmischers eine Erhöhung der relativ kleinen Apertur einer Lichtquelle auf eine grössere Apertur eines Lichtwellenleiters. Denn dadurch, dass man es schafft, den Lichtwellenleiter auf seine volle numerische Apertur auszuleuchten, unabhängig davon, welche numerische Apertur die Lichtquelle besitzt, bleibt die Messung am Lichtwellenleiter von den Lichteinkoppelbedingungen unbeeinflusst.

Der gemäss der DE-A 2 944 977 zwischen der Lichtquelle und dem Lichtwellenleiter eingefügte Modenmischer besteht aus mehreren hintereinander angeordneten Lichtwellenleiterstücken unterschiedlicher Brechungsindexverteilungen, der für einen Energieaustausch unter den in den Lichtwellenleiter eingekoppelten Wellenmoden sorgt.

Der Erfindung liegt nun die Aufgabe zugrunde, eine Anordnung der eingangs genannten Art anzugeben, durch die unabhängig von der Apertur der speisenden Lichtquelle der damit gekoppelte Lichtwellenleiter auf seine volle numerische Apertur ausgeleuchtet wird.

Erfindungsgemäss wird diese Aufgabe dadurch gelöst, dass an mindestens einer Stelle seitlich der Lichtwellenleiterstück (6) eine dazu parallel liegende kurze Blindfaser (7) angeschmolzen ist.

Zweckmässige Anordnungen zur Durchführung dieses Verfahrens gehen aus den Unteransprüchen hervor.

Aus der DE-C 3 042 587 ist das seitliche Anschmelzen einer Blindfaser an eine Lichtleitfaser an sich bekannt, allerdings zum Zwecke der Erhöhung der Durchgangsdämpfung der Lichtleitfaser.

Anhand von in der Zeichnung dargestellten Ausführungsbeispielen wird nun die Erfindung näher erläutert. Es zeigen:

Fig.1 eine aus zwei Lichtwellenleiterstücken bestehenden und

Fig. 2 eine aus drei Lichtwellenleiterstücken bestehende Anordnung zur Aperturanpassung und

Fig. 3 einen Lichtwellenleiterabschnitt, in dem neue Wellenmoden angeregt werden.

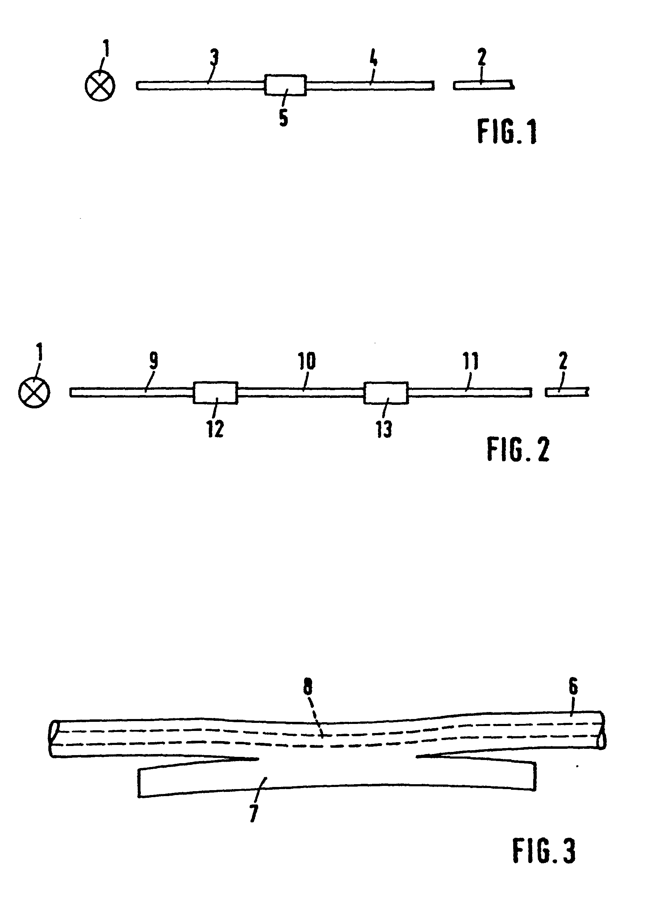

In der Fig. 1 ist schematisch eine Lichtquelle 1 und ein Lichtwellenleiter 2 als Messobjekt dargestellt, zwischen denen ein zweiteiliges Lichtwellenleiterstück zur Aufweitung der numerischen Apertur angeordnet ist. Die beiden Lichtwellenleiterstücke 3 und 4 besitzen unterschiedliche Brechungsprofile. Das eine Lichtwellenleiterstück ist z.B. eine Gradientenprofilfaser und das eine eine Stufenprofilfaser, die beide durch einen Spleiss 5 miteinander verbunden sind. Es ist aber auch möglich, ein einziges Lichtwellenleiterstück mit einem Gradienten- oder Stufenbrechzahlprofil einzusetzen.

An das bzw. die Lichtwellenleiterstücke wird an mindestens einer Stelle eine parallel liegende kurze Blindfaser angeschmolzen. Die Fig. 3 zeigt einen Ausschnitt eines Lichtwellenleiterstücks 6, an das seitlich eine Blindfaser 7 angeschmolzen ist. Aufgrund der beim Anschmelzen der Blindfaser 7 entstehenden Krümmung des lichtleitenden Kerns 8 im Lichtwellenleiterstück 6 werden an dieser Stelle neben den von der Lichtquelle eingespeisten Wellenmoden zusätzliche neue Wellenmoden angeregt. Dadurch weitet sich das von der Lichtquelle mit geringerer numerischer Apertur ausgestrahlte Licht im Lichtwellenleiter auf die volle numerische Apertur aus.

Sofern mehrere miteinander verspleisste Lichtwellenleiterstücke zur Aperturaufweitung eingesetzt werden, ist es zweckmässig, die Blindfaser an einer Spleissstelle mit anzuschmelzen, da die Verspleissung und das Anschmelzen der Blindfaser gleichzeitig in einem Arbeitsgang vorgenommen werden können. Ansonsten kann die Blindfaser auch an jeder beliebigen Stelle eines Lichtleitfaserstücks angeschmolzen werden.

Eine bessere Aperturanpassung als mit den in Fig. 1 dargestellten zwei Lichtwellenleiterstücken ist durch die dreiteilige Anordnung gemäss Fig. 2 erzielbar. Dabei ist das erste Lichtwellenleiterstück 9 eine Gradientenprofilfaser, das zweite 10 eine Stufenprofilfaser und das dritte 11 wiederum eine Gradientenprofilfaser. An der Spleissstelle 12 zwischen dem ersten und dem zweiten Lichtwellenleiterstück ist das Blindstück in der aus der Fig. 3 hervorgehenden Weise angeschmolzen. Der Spleiss 13 verbindet das zweite Lichtwellenleiterstück 10 mit dem dritten Lichtwellenleiterstück 11, welches das Licht nach der Aperturerweiterung in den Lichtwellenleiter 2 einkoppelt.

Zweckmässigerweise ist die Verbindungsstelle 13 lösbar ausgeführt, so dass jederzeit ein an den jeweils vorliegenden Lichtwellenleiter 2 angepasstes Lichtwellenleiterstück 11 eingesetzt werden kann.

Um eine volle Ausleuchtung des dritten Lichtwellenleiterstücks 11 und damit des Lichtwellenleiters 2 zu erreichen, sollte das zweite Lichtwellenleiterstück einen grösseren Kerndurchmesser und eine grössere numerische Apertur als das dritte aufweisen.

### Patentansprüche

1. Anordnung zur Erweiterung der numerischen Apertur einer Lichtquelle auf eine höhere numerische Apertur eines von der Lichtquelle gespeisten Lichtwellenleiters, bei der zwischen der Lichtquelle und dem Lichtwellenleiter mindestens ein Lichtwellenleiterstück eingefügt ist, in dem neben den von der Lichtquelle eingespeisten Wellenmoden auch höhere Wellenmoden angeregt werden, dadurch gekennzeichnet, dass an mindestens einer Stelle seitlich des Lichtwellenleiterstücks (6) eine dazu parallel liegende kurze Blindfaser (7) angeschmolzen ist.

2. Anordnung nach Anspruch 1, dadurch gekennzeichnet, dass die Blindfaser (7) an einer Stelle angeschmolzen ist, wo zwei Lichtwellenleiterstücke miteinander verspleisst (5, 12) sind.

3. Anordnung nach einem der vorhergehenden Ansprüche, dadurch gekennzeichnet, dass drei Lichtwellenleiterstücke (9, 10, 11) aneinandergereiht sind, von denen das erste (9) eine Gradientenprofilfaser, das zweite (10) eine Stufenprofilfaser und das dritte (11) wiederum eine Gradientenprofilfaser ist.

4. Anordnung nach Anspruch 3, dadurch gekennzeichnet, dass das zweite Lichtwellenleiterstück (10) einen grösseren Kerndurchmesser und eine grössere numerische Apertur besitzt als das dritte Lichtwellenleiterstück (11).

### Claims

1. Arrangement for increasing the numerical aperture of a light source to the higher numerical aperture of an optical waveguide fed by the light source, wherein at least one optical waveguide section is inserted between the light source and the optical waveguide, with higher wave modes being excited therein in addition to the wave modes fed in by the light source, characterized in that at least at one location a short blind fiber (7) disposed in parallel with the optical waveguide section (6) is attached by melting to the side of said optical waveguide section.

2. Arrangement according to claim 1, characterized in that the blind fiber (7) is attached by melting at a location where two optical waveguide sections are spliced together (5, 12).

3. Arrangement according to one of the preceding claims, characterized in that three optical waveguide sections (9, 10, 11) are arranged one behind the other, the first waveguide section (9) being a gradient profile fiber, the second (10) a stepped profile fiber and the third (11) again a gradient profile fiber.

4. Arrangement according to claim 3, characterized in that the second optical waveguide section (10) has a larger core diameter and a larger numerical aperture than the third optical waveguide section (11).

### Revendications

1. Dispositif pour agrandir l'ouverture numérique d'une source lumineuse à l'ouverture numérique plus grande d'un guide d'ondes optique alimenté par la source lumineuse, dispositif dans lequel est inséré, entre la source lumineuse et le guide d'ondes, au moins un tronçon de guide d'ondes optique dans lequel, à côté des modes d'ondes injectés par la source lumineuse, sont excités également des modes d'ondes supérieurs, caractérisé en ce que, à au moins un endroit, une fausse fibre (7) de faible longueur, disposée parallèlement au tronçon de guide d'ondes (6), est fixée latéralement, par fusion, à ce tronçon de guide d'ondes.

2. Dispositif selon la revendication 1, caractérisé en ce que la fausse fibre (7) est fixée à un endroit où deux tronçons de guide d'ondes optique sont connectés l'un à l'autre par une épissure (5, 12).

3. Dispositif selon une des revendications précédentes, caractérisé en ce qu'il comprend trois tronçons de guide d'ondes optique (9, 10, 11) connectés en série, dont le premier (9) est une fibre à gradient d'indice, le second (10) est une fibre à saut d'indice et le troisième (11) est de nouveau une fibre à gradient d'indice.

4. Dispositif selon la revendication 3, caractérisé en ce que le second tronçon de guide d'ondes (10) possède un plus grand diamètre de coeur et une plus grande ouverture numérique que le troisième tronçon de guide d'ondes (11).

FIG.1

FIG. 2

FIG.3